# EUROPÄISCHE PATENTANMELDUNG

(11) **EP 4 517 141 A1**
(43) Veröffentlichungstag der Anmeldung: **05.03.2025**
(21) Anmeldenummer: 23194016.4
(22) Anmeldetag: 29.08.2023
(51) Int. Cl.: F16K 5/06, F16K 11/085

(54) **VENTIL**

(71) Anmelder: TI Automotive Technology Center GmbH, 76437 Rastatt (DE)
(72) Erfinder: TUZIN, Artem, 76297 Stutensee (DE); OLBRICH, Matthias Bernhard, 76437 Rastatt (DE)
(74) Vertreter: Reiser & Partner Patentanwälte mbB

(57) **Zusammenfassung**

Ventil (1), umfassend ein Ventilgehäuse (2) mit einer Ventilkammer (3), wobei die Ventilkammer (3) eine Kammerwand (4) aufweist in die zumindest ein Fluidkanal (5) mündet, wobei in der Ventilkammer (3) ein Ventilkern (6) gelagert ist, wobei der Ventilkern (6) mit einer Kanalstruktur versehen ist, welche mit dem Fluidkanal (5) zusammenwirkt, wobei dem Fluidkanal (5) eine Dichtung (7) zugeordnet ist, welche einen hülsenförmigen Haltekörper (8) aufweist, wobei der Haltekörper (8) in dem Fluidkanal (5) angeordnet ist, wobei dem Haltekörper (8) an einer Stirnseite (9) ein Dichtkörper (10) angeordnet ist, wobei der Dichtkörper (10) eine gebogene Dichtkontur (11) aufweist, welche in Richtung des Ventilkerns (6) weist.

## Beschreibung

Die Erfindung betrifft ein Ventil, umfassend ein Ventilgehäuse mit einer Ventilkammer, wobei die Ventilkammer eine Kammerwand aufweist, in der zumindest ein Fluidkanal mündet, wobei in der Ventilkammer ein Ventilkern gelagert ist, wobei der Ventilkern mit einer Kanalstruktur versehen ist, welche mit dem Fluidkanal zusammenwirkt, wobei dem Fluidkanal eine Dichtung zugeordnet ist.

Ein derartiges Ventil ist aus der WO 2017/095994 A1 bekannt. Das dort beschriebene Ventil ist als Rotationsventil ausgebildet und kommt in Kühlkreisläufen zur Steuerung des Kühlmittelstroms zum Einsatz. Durch die in das Ventilgehäuse mündenden Fluidöffnungen kann ein Kühlfluid in das Ventil ein- und ausströmen. Die in den Ventilkern eingebrachte Kanalstruktur steuert dabei den Kühlmittelstrom, wobei je nach Ausgestaltung und Anzahl der Fluidkanäle unterschiedliche Kühlkreisläufe angesteuert, der Volumenstrom des Kühlmittels reguliert und/oder die Durchflussrichtung des Kühlmittels angepasst werden können.

Bei einem Rotationsventil erfolgt eine Anpassung des Kühlmittelstroms durch Drehen des Ventilkerns, wobei der entsprechende Aktor zum Drehen des Ventilkerns einfach ausgebildet und einfach ansteuerbar ist. Demensprechend sind Rotationsventile und die dazugehörigen Aktoren kostengünstig herstellbar und benötigen nur wenig Bauraum.

Rotationsventile sind demensprechend insbesondere vorteilhaft in Bezug auf den Einsatz in Temperierkreisläufen im Bereich der Elektromobilität. Zu temperierende Komponenten von Elektrofahrzeugen sind dabei insbesondere elektrische Energiespeicher, die Leistungselektronik oder Steckverbindungen von Schnellladeeinrichtungen. Das durch den Temperierkreislauf strömende Temperiermedium kann je nach Anforderung in einer Heizeinrichtung erwärmt oder in einer Kühleinrichtung abgekühlt werden. Die Steuerung des Temperiermediums erfolgt über ein oder mehrere Rotationsventile.

Zur Vermeidung interner Leckagen ist im Bereich des Übergangs zwischen Fluidkanal und Ventilkern ein Dichtkörper angeordnet. Dabei besteht das Problem, dass der Dichtkörper je nach Ausgestaltung hohe Reibkräfte verursachen kann, was sich negativ auf den Verschleiß und die erforderliche Stellkraft des Aktors auswirkt.

Der Erfindung liegt die Aufgabe zugrunde, ein Ventil bereitzustellen, welches kostengünstig herstellbar ist und eine lange Gebrauchsdauer aufweist.

Diese Aufgabe wird mit den Merkmalen von Anspruch 1 gelöst. Auf vorteilhafte Ausgestaltungen nehmen die Unteransprüche Bezug.

Das erfindungsgemäße Ventil umfasst ein Ventilgehäuse mit einer Ventilkammer, wobei die Ventilkammer eine Kammerwand aufweist, in die zumindest ein Fluidkanal mündet, wobei in der Ventilkammer ein Ventilkern gelagert ist, wobei der Ventilkern mit einer Kanalstruktur versehen ist, welche mit dem Fluidkanal zusammenwirkt, wobei dem Fluidkanal eine Dichtung zugeordnet ist, welche einen hülsenförmigen Haltekörper aufweist, wobei der Haltekörper in dem Fluidkanal angeordnet ist, wobei dem Haltekörper an einer Stirnseite ein Dichtkörper zugeordnet ist, wobei der Dichtkörper eine gebogene Dichtkontur aufweist, welche in Richtung des Ventilkerns weist.

Durch die gebogene Dichtkontur liegt die Dichtung linienförmig an den Ventilkern an. Erfolgt die Anlage unter elastischer Vorspannung, ergibt sich eine linienförmige Anlage. Die linienförmige Anlage geht mit einer geringen Kontaktfläche einher, so dass nur eine geringe Anpresskraft notwendig ist, um die zur Abdichtung notwendige Flächenpressung zu erreichen. Ist die Dichtung aus einem Werkstoff mit geringem Reibkoeffizienten ausgebildet, was insbesondere bei thermoplastischen Werkstoffen der Fall ist, ergibt sich eine geringe zu überwindende Reibkraft, welche insbesondere in Verbindung mit geringen Ventilabmessungen und dem damit einhergehenden kleinen Wirkradius zu einem geringen erforderlichen Antriebsmoment führt. Dadurch erhöht sich die Gebrauchsdauer des Ventils und es ist die Verwendung kostengünstiger Komponenten möglich.

Der Dichtkörper kann kragenförmig gebogen sein. Bei dieser Ausgestaltung ist der Dichtkörper vorzugsweise dünnwandig ausgebildet, wobei die Wandstärke des Dichtkörpers vergleichbar mit der Wandstärke des Haltekörpers ist. Dies ermöglicht eine besonders materialsparende Ausgestaltung der Dichtung. Durch die kragenförmige Ausgestaltung ist der Dichtkörper federnd und kann so mit elastischer Vorspannung dichtend an dem Ventilkern anliegen. Eine federnde Ausgestaltung ist dabei auch bei Wahl eines nicht-elastischen Werkstoffes möglich.

Ein Abschnitt des Dichtkörpers kann U-förmig gebogen sein, wobei der U-förmig gebogene Abschnitt dichtend an dem Ventilkern anliegt. Durch diese Ausgestaltung kann eine linienförmige Anlage des Dichtkörpers an den Ventilkern mit einfachen Mitteln realisiert werden. Die Formgebung des Abschnittes kann dabei so erfolgen, dass der den Ventilkern berührende Teil des Abschnittes radial innen liegt. Bei dieser Ausgestaltung ist der gebogene Abschnitt so geformt, dass der Scheitel radial nach innen verlagert ist. Dies ermöglicht eine totraumarme Ausgestaltung der Dichtkontur und es verringert sich die Anlagefläche zwischen Dichtkörper und Ventilkern. Insbesondere im Zusammenhang mit der kragenförmigen Ausgestaltung des Dichtkörpers ergibt sich durch die federnde Ausgestaltung eine besonders gute Dichtwirkung.

In einer ersten Ausgestaltung ist die Dichtung aus elastomerem Material ausgestaltet, wobei die Dichtkontur des Dichtkörpers U-förmig ausgebildet ist.

In einer vorteilhaften Ausgestaltung ist die Dichtung aus einem formstabilen und/oder zähharten Kunststoff ausgebildet. In Frage kommen dabei insbesondere nichtelastomere Werkstoffe, vorzugsweise thermoplastische Kunststoffe. Dabei ist das Material so gewählt, dass es formstabil ist und geringe Reibkräfte verursacht, wenn der Dichtkörper an dem Ventilkern anliegt. Durch die Formgebung des Dichtkörpers können sich dennoch federnde Eigenschaften ergeben, so dass der Dichtkörper mit elastischer Vorspannung an dem Ventilkern anliegt. Durch den insbesondere im Vergleich mit elastomeren Dichtungen geringen Reibkoeffizienten sind die von dem Aktor in den Ventilkern einzubringenden Kräfte besonders gering, um den Ventilkern gegenüber der Dichtung bewegen zu können. Als Material für den Dichtkörper kommen dabei beispielsweise Polypropolen (PP) oder Polyamid (PA) in Betracht. Vorzugsweise ist die Dichtung einstückig ausgebildet. Durch die vorteilhafte Ausgestaltung ist es insbesondere nicht erforderlich, ein gesondertes Federelement, beispielsweise aus einem Elastomer vorzusehen.

Das freie Ende des Dichtkörpers kann in Richtung der Kammerwand weisen. Insbesondere im Zusammenhang mit der kragenförmigen Ausgestaltung des Dichtkörpers aus dünnwandigem Material ergibt sich dabei eine federnde Anlage des freien Endes des Dichtkörpers an der Kammerwand des Ventilgehäuses. Dabei bewirkt der Dichtkörper eine Abdichtung in Richtung des Ventilgehäuses und unterbindet einen Leckagestrom zwischen Dichtung und Ventilgehäuse. Bei dieser Ausgestaltung ist vorteilhaft, dass es auf die Ausgestaltung des Haltekörpers nicht ankommt, die Dichtfunktion zwischen Dichtung und Ventilgehäuse wird durch den Dichtkörper realisiert, indem das freie Ende des Dichtkörpers in Richtung der Kammerwand weist und dort mit elastischer Vorspannung dichtend anliegt. Dabei liegt das freie Ende des Dichtkörpers linienförmig an der Kammerwand an, sodass bei geringer Anpresskraft bereits eine hohe Dichtwirkung erzielt werden kann.

Der Haltekörper kann schwimmend in dem Fluidkanal gelagert sein. Dabei bildet der Haltekörper lediglich ein Stützelement, das die Lage der Dichtung relativ zu dem Fluidkanal sicherstellt. Durch die schwimmende Lagerung kann sich die Dichtung in dem Fluidkanal verschieben. Die schwimmende Lagerung kann so erfolgen, dass zwischen Dichtung und Fluidkanal eine Spielpassung ausgebildet ist. Durch die verschiebbare Ausgestaltung kann eine dauerhafte Dichtwirkung und eine ausreichende elastische Anpressung der Dichtung an den Ventilkern sichergestellt werden. Insbesondere während der Montage des Ventils ist diese Ausgestaltung vorteilhaft, weil die Dichtung lediglich in den Fluidkanal eingesteckt werden muss. Die Ausrichtung der Dichtung kann hingegen selbsttätig erfolgen, wenn der Ventilkern in dem Ventilgehäuse montiert wird. Die Dichtung kann sich selbsttätig in dem Fluidkanal drehen. Es ist demensprechend insbesondere nicht erforderlich, die Dichtung bereits im Zuge der Montage lagerichtig zu verdrehen.

Der Dichtköper kann zwischen dem freien Ende und dem U-förmigen Abschnitt S-förmig gebogen sein. Diese Ausgestaltung verbessert die federnde Wirkung des Dichtkörpers und trägt damit insgesamt zu einer Verbesserung der Dichtwirkung bei.

Das Ventil kann ein Rotationsventil sein, wobei der Ventilkern drehbar in der Ventilkammer gelagert ist. Eine Anpassung des Fluidstroms erfolgt durch Drehen des Ventilkerns und kann besonders einfach durch einen Aktor angesteuert werden. Bei der Ausgestaltung als Rotationsventil kann das Ventilgehäuse mit einer Vielzahl von Fluidkanälen versehen sein, welche mit dem Ventilkern zusammenwirken, wobei dadurch mit einfachen Mitteln verschiedene Fluidströme realisiert werden können. Wenn das Rotationsventil Bestandteil eines Temperierkreislaufs ist, ist es demensprechend denkbar, dass über das Rotationsventil verschiedene Komponenten mit Temperiermedium versorgt werden, wobei das Temperiermedium zum Erwärmen oder zum Kühlen dienen kann.

Dabei kann das Ventil ein Schaltventil sein, welches wahlweise verschiedene Komponenten ansteuert. Alternativ kann das Ventil ein Proportionalventil sein, welches auch die Regulierung des Volumenstroms des Fluids ermöglicht.

Einige Ausgestaltungen des erfindungsgemäßen Ventils werden nachfolgend anhand der Figuren näher erläutert. Die Figuren zeigen, jeweils schematisch:
- Fig. 1: eine erste Ausführungsform eines Ventils in Form eines Rotationsventils mit Proportionalsteuerung;
- Fig. 2: das Ventil gemäß Fig. 1 im Schnitt;
- Fig. 3: das Ventil gemäß Fig. 1 mit alternativ ausgestalteter Dichtung im Schnitt;
- Fig. 4: eine zweite Ausführungsform eines Ventils;
- Fig. 5: eine Untersicht einer dritten Ausführungsform eines Ventils;
- Fig. 6: im Detail den Bereich einer thermoplastischen Dichtung im Schnitt;
- Fig. 7: im Detail den Bereich einer elastomeren Dichtung im Schnitt;
- Fig. 8: im Detail eine Dichtung.

Die Figuren zeigen ein Ventil 1 in Form eines Rotationsventils, welches einen Bestandteil eines Temperierkreislaufs einer zu klimatisierenden Einrichtung bildet. Vorliegend gelangt das Ventil 1 in elektromobilen Anwendungen als Bestandteil des Temperierkreislaufs eines Elektrofahrzeugs zum Einsatz. Das Ventil 1 ist dabei in einen Temperierkreislauf eines elektromotorischen Antriebs eines Elektrofahrzeugs eingebunden und lenkt Volumenströme des in den Temperierkreislauf geführten Mediums zu den elektrischen Energiespeichern und Elektromotoren sowie zur Leistungselektronik. Durch das Ventil 1 können die Temperiermittelströme des Temperierkreislaufs modifiziert werden.

Durch das Ventil 1 kann der Volumenstrom des Temperiermittels vergrößert oder verkleinert werden. Des Weiteren können durch Drehen des Ventilkerns 6 unterschiedliche Fluidkanäle 5 strömungsleitend verbunden und so die Strömungsrichtung des Temperiermittels geändert werden.

Je nach Umgebungstemperatur und Leistungsanforderung können beispielsweise ein Temperiermittelstrom zunächst ausschließlich zu den elektrischen Energiespeichern geleitet werden und dort je nach Anforderung die elektrischen Energiespeicher kühlen oder erwärmen. Bei hohen Leistungsanforderungen kann ein Kühlmittelstrom zu der Leistungselektronik und auch zu den Elektromotoren geleitet werden, um diese Komponenten zu kühlen. Die Modifikation des Kühlmittelstroms erfolgt dabei durch ein oder mehrere Ventile 1. Der Aktor, der den Ventilkern 6 in Rotation versetzt, kann dabei so ausgebildet sein, dass der Ventilkern 6 diskrete Positionen einnimmt, sodass das Ventil 1 ein Schaltventil ist. Alternativ kann der Aktor so ausgestaltet sein, dass der Ventilkern 6 auch Zwischenpositionen einnehmen kann und bei dieser Ausgestaltung ein Proportionalventil bildet.

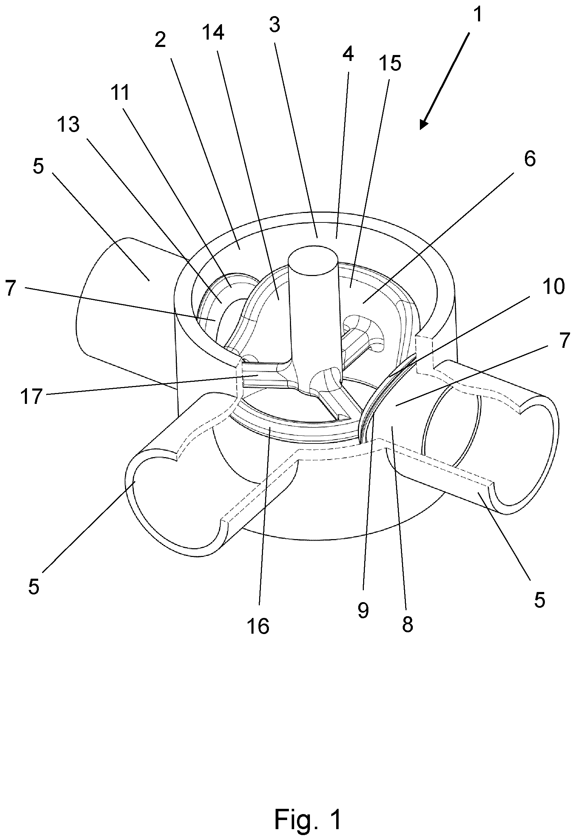

Figur 1 zeigt eine erste Ausführungsform eines Ventils 1 mit einem aus Kunststoff ausgebildeten Ventilgehäuse 2, in dem eine Ventilkammer 3 ausgebildet ist. Die Ventilkammer 3 weist eine Kammerwand 4 auf, in die mehrere Fluidkanäle 5 münden. Im dargestellten Ausführungsbeispiel sind drei Fluidkanäle 5 vorgesehen, von denen einer ein Fluid zuleitet und zwei das Fluid ableiten. In der Ventilkammer 3 ist ein Ventilkern 6 drehbar gelagert, wobei der Ventilkern 6 mit einer Kanalstruktur versehen ist, welche mit den Fluidkanälen 5 zusammenwirkt. Dadurch, dass der Ventilkern 6 drehbar in der Ventilkammer 3 gelagert ist, bildet das Ventil 1 ein Rotationsventil. Zur besseren Erkennbarkeit der einzelnen Bauteile ist das Ventil 1 teilweise in einer Ausbruchsansicht dargestellt.

Der Ventilkern 6 weist einen Ventilkernmantel 14 auf. Der Ventilkernmantel 14 ist umlaufend ausgebildet. Er weist einen ersten Abschnitt 15 auf, um je nach Stellung des Ventilkerns 6 dichtend an der Dichtung 7 anzuliegen, um einen Fluidkanal 5 zu verschließen. Der Ventilkernmantel 14 weist zweiten Abschnitt 16 auf, der derart ausgebildet ist, dass je nach Stellung des Ventilkerns 6 der Fluidkanal 5 ganz oder teilweise frei ist, um den Fluidkanal 5 strömungsleitend mit der Ventilkammer 3 zu verbinden. Der erste Abschnitt 15 kann insbesondere ein Ringabschnitt sein, der die gesamte Querschnittsfläche des Fluidkanals 5 abdecken kann. Hierzu kann der erste Abschnitt 15 als ein Zylinderabschnitt ausgebildet sein. Der zweite Abschnitt 16 kann als Ringabschnitt ausgebildet sein, der nicht die gesamte Querschnittsfläche des Fluidkanals 5 abdeckt.

In Figur 1 ist der Ventilkernmantel 14 über drei Verbindungsstege 17 mit einer Ventilkernachse verbunden.

In Figur 1 ist bei den beiden Fluidkanälen 5, die als aus der Ventilkammer 3 strömungsableitende Fluidkanäle ausgebildet sind, jeweils eine Dichtung 7 zugeordnet. Die Dichtung 7 weist einen hülsenförmigen Haltekörper 8 auf, wobei der Haltekörper 8 jeweils in dem Fluidkanal 5 angeordnet ist. Dem Haltekörper 8 ist an einer Stirnseite 9 ein Dichtkörper 10 zugeordnet, wobei der Dichtkörper 10 eine gebogene Dichtkontur 11 aufweist, welche in Richtung des Ventilkerns 6 weist.

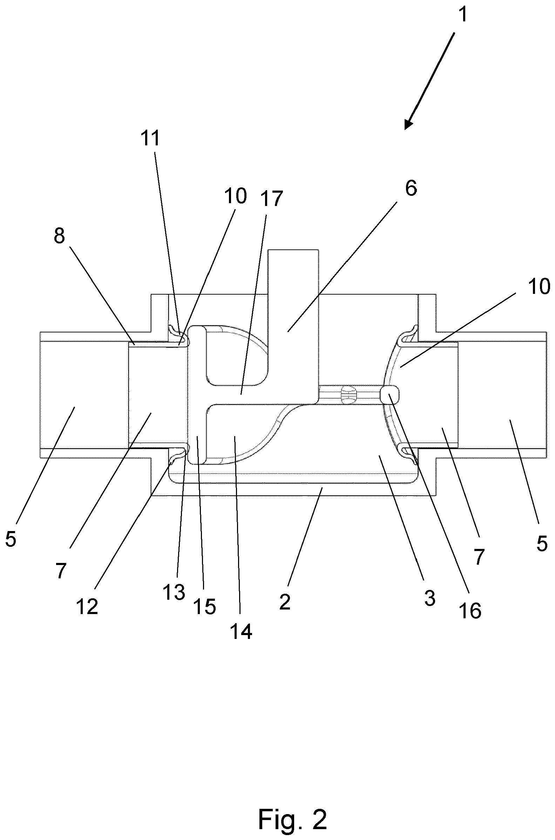

Der Dichtkörper 10 ist kragenförmig gebogen. Die Wandstärke des Dichtkörpers 10 entspricht dabei im Wesentlichen der Wandstärke des Haltekörpers 8. Ein Abschnitt 13 des Dichtkörpers 10 ist U-förmig gebogen, wobei der U-förmig gebogene Abschnitt 13 dichtend an den Ventilkern 6 anliegt. Das freie Ende 12 des Dichtkörpers 10 (vgl. auch Figur 2) weist in Richtung der Kammerwand 4 und liegt dort dichtend an.

Der Haltekörper 8 ist schwimmend in dem Fluidkanal 5 gelagert. Dabei besteht zwischen Haltekörper 8 und Fluidkanal 5 eine Spielpassung, sodass sich der Haltekörper 8 selbsttätig relativ zu dem Fluidkanal 5 verdrehen kann.

Das als Rotationsventil ausgebildete Ventil 1 weist nur eine geringe Teileanzahl auf und besteht im Wesentlichen nur aus einem Ventilgehäuse 2, einem Ventilkern 6, je Fluidkanal 5 einer Dichtung 7 und ggf. einer zusätzlichen Dichtung, welche den Ventilkern 6 stirnseitig am Durchtritt einer Schaltwelle in Richtung des Aktors abdichtet.

Das in Figur 1 gezeigte Ventil 1 ist als Proportionalventil ausgestaltet. Der Ventilkern 6 ist dazu eingerichtet, nur einen Fluidkanal 5 gänzlich versperren zu können. Dabei sind auch Zwischenstellungen möglich, so dass durch alle Fluidkanäle 5 zumindest ein Teilvolumenstrom geleitet werden kann.

Figur 2 zeigt das Ventil 1 gemäß Figur 1 im Schnitt. Dabei ist zu erkennen, dass ein Abschnitt 13 des Dichtkörpers 10 U-förmig gebogen ist, wobei der U-förmig gebogene Abschnitt 13 dichtend an den Ventilkern 6 anliegt. Das freie Ende 12 des Dichtkörpers 10 weist in Richtung der Kammerwand 4 und liegt dort dichtend an. Der Dichtkörper 10 ist zwischen dem freien Ende 12 und dem U-förmigen Abschnitt 13 S-förmig gebogen. Die Dichtung 7 ist aus formstabilem, thermoplastischem Kunststoff ausgebildet, beispielsweise aus Polypropolen oder Polyamid.

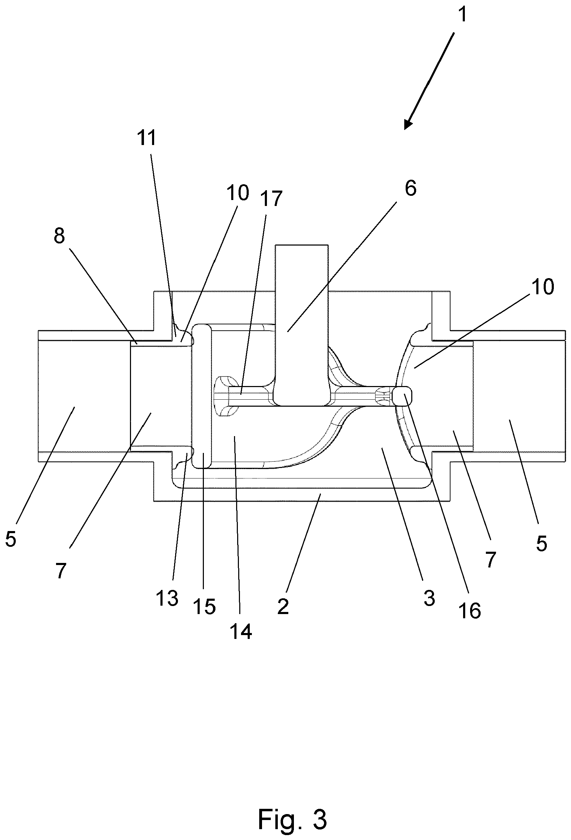

Figur 3 zeigt das Ventil 1 gemäß Figur 1, wobei die Dichtung 7 bei dieser Ausgestaltung aus elastomerem Material ausgebildet ist. Bei dieser Ausgestaltung ist ein Abschnitt 13 des Dichtkörpers 10 ebenfalls U-förmig gebogen und der U-förmig gebogene Abschnitt 13 liegt dichtend an dem Ventilkern 6 an. Der Dichtkörper 10 ist dabei aber nicht dünnwandig ausgebildet, sondern besteht aus Vollmaterial.

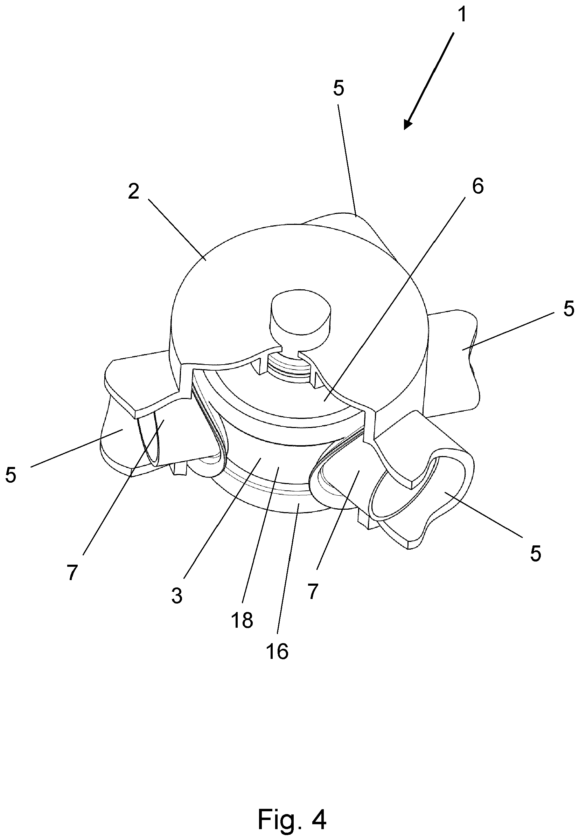

Figur 4 zeigt eine alternative Ausgestaltung des in Figur 1 gezeigten Ventils 1. In dieser Ausführungsform umfasst das Ventil vier Fluidkanäle 5. Auch das in Figur 4 gezeigte Ventil 1 ist als Proportionalventil ausgestaltet. Der Ventilkern 6 ist allerdings eingerichtet, zwei benachbarte Fluidkanäle 5 strömungsleitend zu verbinden. Dabei sind auch Zwischenstellungen möglich, so dass der Volumenstrom in Richtung eines Fluidkanals 5 modifizierbar ist. Hierzu ist der Ventilkern 6 zylindrisch ausgebildet. In die zylindrische Wand ist eine Ausnehmung eingebracht, welche sich über einen Teil des Umfangs der Wand erstreckt.

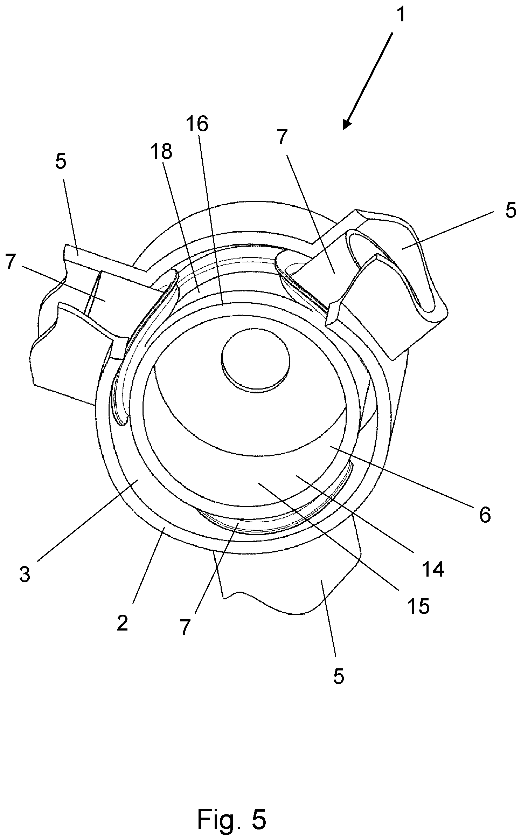

Figur 5 zeigt eine weitere Ausführungsform des Ventils 1 in der Untersicht. In dieser Ausführungsform umfasst das Ventil 1 drei Fluidkanäle 5. In allen Fluidkanälen 5 ist eine Dichtung 7 angeordnet. Ein Zufluss eines Fluids kann in dieser Ausführungsform durch eine Öffnung der nicht dargestellten Unterseite des Ventilgehäuses 2 erfolgen.

In den Figuren 4 und 5 weist der Ventilkernmantel 14 im zweiten Abschnitt 16 eine Ausnehmung 18 auf, um je nach Stellung des Ventilkerns 6 den Fluidkanal 5 mit der Ventilkammer 3 strömungsleitend zu verbinden.

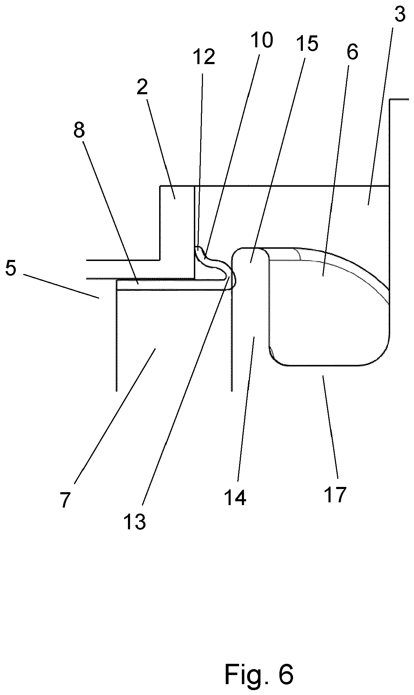

Figur 6 zeigt das Ventil 1 gemäß Figur 4 im Detail im Bereich der Dichtung 7 im Schnitt. Dabei ist zu erkennen, dass ein Abschnitt 13 des Dichtkörpers 10 U-förmig gebogen ist, wobei der U-förmig gebogene Abschnitt 13 dichtend an den Ventilkern 6 anliegt. Das freie Ende 12 des Dichtkörpers 10 weist in Richtung der Kammerwand 4 und liegt dort dichtend an. Der Dichtkörper 10 ist zwischen dem freien Ende 12 und dem U-förmigen Abschnitt 13 S-förmig gebogen. Die Dichtung 7 ist aus thermoplastischem Material ausgebildet, beispielsweise aus Polypropolen oder Polyamid.

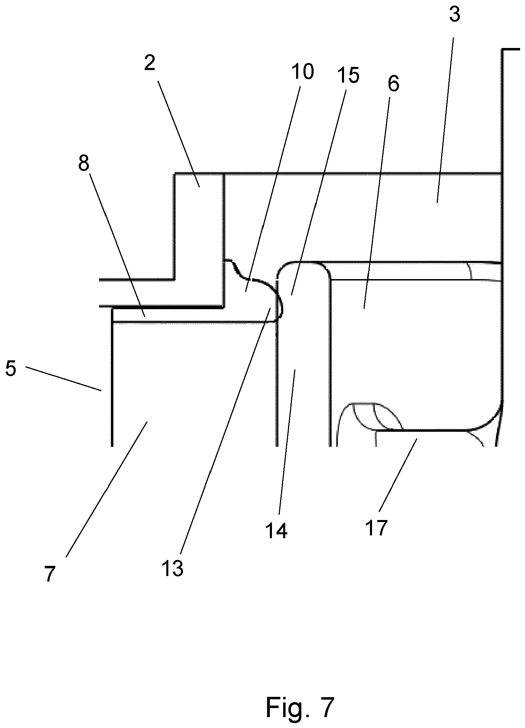

Figur 7 zeigt das Ventil 1 gemäß Figur 4 im Detail im Bereich der Dichtung 7 im Schnitt, wobei die Dichtung 7 bei dieser Ausgestaltung aus elastomerem Material ausgebildet ist. Bei dieser Ausgestaltung ist ein Abschnitt 13 des Dichtkörpers 10 ebenfalls U-förmig gebogen und der U-förmig gebogene Abschnitt 13 liegt dichtend an dem Ventilkern 6 an. Der Dichtkörper 10 ist dabei aber nicht dünnwandig ausgebildet, sondern besteht aus Vollmaterial.

Alternativ ist es denkbar, das Ventil 1 als Schaltventil auszugestalten. Der Ventilkern 6 ist bei dieser Ausgestaltung dazu eingerichtet, wahlweise Fluidkanäle 5 strömungsleitend miteinander zu verbinden. Das Ventilgehäuse 2 kann wahlweise mit einer unterschiedlichen Anzahl und Anordnung von Fluidkanälen 5 versehen sein. Ebenso variabel ist die Anordnung und Ausgestaltung des Ventilkerns 6. Die variable Ausgestaltung von Ventilgehäuse 2 und Ventilkern 6 ermöglicht beispielsweise die Ausgestaltung eines Proportionalventils mit einer oder mehreren Ausnehmungen, die Ausgestaltung eines Schaltventils mit Ventilkern 6 mit Kanalstrukturen oder die Ausgestaltung eines kombinierten Proportional/Schaltventils.

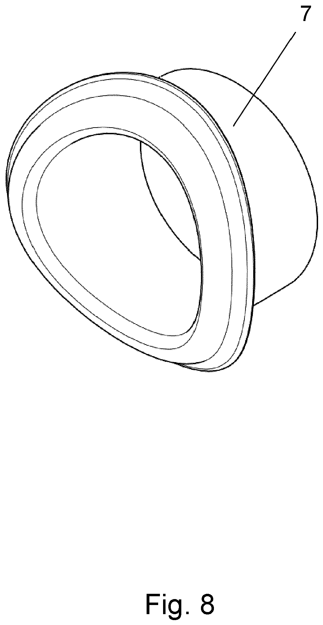

Figur 8 zeigt im Detail eine Dichtung 7 für eines der zuvor gezeigten Ventile 1. Die Dichtung 7 ist dabei jeweils schwimmend in jedem Fluidkanal 5 gelagert, der gegenüber dem Ventilkern 6 abgedichtet werden soll. Durch die schwimmende Lagerung kann sich die Dichtung 7 in dem Fluidkanal 5 verschieben und während der Montage auch verdrehen.

In den Figuren 2, 3, 6 und 7 ist der Dichtkörper 10 jeweils im unverformten Zustand dargestellt. Dies wird zeichnerisch durch eine Überlappung mit dem Ventilkern 6 angedeutet. Bei einem realen Produkt ergibt sich auf diese Weise eine Vorspannung der Dichtung 7 zwischen dem Ventilkern 6 und dem Ventilgehäuse 2, die die Dichtwirkung verbessert.

## Patentansprüche

1. Ventil (1), umfassend ein Ventilgehäuse (2) mit einer Ventilkammer (3), wobei die Ventilkammer (3) eine Kammerwand (4) aufweist in die zumindest ein Fluidkanal (5) mündet, wobei in der Ventilkammer (3) ein Ventilkern (6) gelagert ist, wobei der Ventilkern (6) mit einer Kanalstruktur versehen ist, welche mit dem Fluidkanal (5) zusammenwirkt, wobei dem Fluidkanal (5) eine Dichtung (7) zugeordnet ist, welche einen hülsenförmigen Haltekörper (8) aufweist, wobei der Haltekörper (8) in dem Fluidkanal (5) angeordnet ist, wobei dem Haltekörper (8) an einer Stirnseite (9) ein Dichtkörper (10) angeordnet ist, wobei der Dichtkörper (10) eine gebogene Dichtkontur (11) aufweist, welche in Richtung des Ventilkerns (6) weist.

2. Ventil nach Anspruch 1, **dadurch gekennzeichnet, dass** der Dichtkörper (10) kragenförmig gebogen ist.

3. Ventil nach Anspruch 1 oder 2, **dadurch gekennzeichnet, dass** ein Abschnitt (13) des Dichtkörpers (10) U-förmig gebogen ist, wobei der Abschnitt (13) dichtend an den Ventilkern (6) anliegt.

4. Ventil nach einem der Ansprüche 1 bis 3, **dadurch gekennzeichnet, dass** die Dichtung (7) aus einem formstabilen Kunststoff ausgebildet ist.

5. Ventil nach einem der Ansprüche 1 bis 4, **dadurch gekennzeichnet, dass** die Dichtung (7) aus einem zähharten Kunststoff ausgebildet ist.

6. Ventil nach einem der Ansprüche 1 bis 5, **dadurch gekennzeichnet, dass** die Dichtung (7) einstückig ausgebildet ist.

7. Ventil nach einem der Ansprüche 1 bis 6, **dadurch gekennzeichnet, dass** die Dichtung (7) aus thermoplastischem Kunststoff ausgebildet ist.

8. Ventil nach einem der Ansprüche 1 bis 7, **dadurch gekennzeichnet, dass** das freie Ende (12) des Dichtkörpers (10) in Richtung der Kammerwand (4) weist.

9. Ventil nach Anspruch 8, **dadurch gekennzeichnet, dass** das freie Ende (12) des Dichtkörpers (10) an der Kammerwand (4) anliegt.

10. Ventil nach einem der Ansprüche 1 bis 9, **dadurch gekennzeichnet, dass** der Haltekörper (8) schwimmend in dem Fluidkanal (5) gelagert ist.

11. Ventil nach einem der Ansprüche 3 bis 10, **dadurch gekennzeichnet, dass** der Dichtkörper (10) zwischen dem freien Ende (12) und dem U-förmigen Abschnitt (13) S-förmig gebogen ist.

12. Ventil (1) nach einem der Ansprüche 1 bis 11, ausgebildet als Rotationsventil, wobei der Ventilkern (6) drehbar in der Ventilkammer (3) gelagert ist.

13. Ventil (1), ausgebildet als Schaltventil oder als Proportionalventil.
